# EUROPÄISCHE PATENTSCHRIFT

(11) **EP 1 055 337 B1**
(45) Veröffentlichungstag und Bekanntmachung des Hinweises auf die Patenterteilung: **27.06.2007**
(21) Anmeldenummer: 99966873.4
(22) Anmeldetag: 15.12.1999
(51) Int. Cl.: H04Q 7/22, H04N 1/00

(54) **VERFAHREN UND VORRICHTUNG ZUR ÜBERTRAGUNG VON KURZNACHRICHTEN IN TELEKOMMUNIKATIONSNETZEN**
METHOD AND DEVICE FOR TRANSMITTING SHORT MESSAGES IN TELECOMMUNICATIONS NETWORKS
PROCEDE ET DISPOSITIF DE TRANSMISSION DE MESSAGES COURTS DANS DES RESEAUX DE TELECOMMUNICATION

(30) Priorität: 15.12.1998 DE 19857902
(43) Veröffentlichungstag der Anmeldung: 29.11.2000
(73) Patentinhaber: T-Mobile Deutschland GmbH, 53227 Bonn (DE)
(72) Erfinder: KEHR, Klaus, D-53111 Bonn (DE); SALEM, Tarek, D-53227 Bonn (DE)
(74) Vertreter: Riebling, Peter
(86) Internationale Anmeldenummer: PCT/DE1999/003997
(87) Internationale Veröffentlichungsnummer: WO 2000/036854

(56) Entgegenhaltungen:
- EP-A- 0 924 945
- WO-A-97/20442
- WO-A-98/35513
- CLAPTON A ET AL: "SUPPORTING FACSIMILE IN THE GSM PLMN" PROCEEDINGS OF THE NORDIC SEMINAR ON DIGITAL LAND MOBILE RADIO COMMUNICATIONS (DMR),FI,HELSINKI, TELECOM FINLAND, Bd. SEMINAR 4, 1990, Seiten 1-10, XP000515545

## Beschreibung

Die Erfindung betrifft ein Verfahren zur Übertragung von Kurznachrichten in Telekommunikationsnetzen.

Das Senden und Empfangen von Kurznachrichten (SMS) in digitalen Mobilfunknetzen ist bereits seit einigen Jahren Stand der Technik. Wegen der zunehmenden Akzeptanz dieser neben der Telefonie existierenden Kommunikationsmöglichkeit sind Konverter (Gateways) zwischen SMS und Emails implementiert worden, so daß SMS-Nachrichten als Emails und Emails als SMS-Nachrichten versendet und empfangen werden können. Dies hat zwar die Akzeptanz weiter gesteigert, setzt jedoch zum Senden und Empfangen von Kurznachrichten das Vorhandensein eines Zugangs zu Emails voraus.

Des weiteren wurden Konverter zum Versenden von SMS auf Fax-Geräte implementiert. Wegen der benötigten langen Verbindungszeit zum Aushandeln der Übertragungsrate und zur Übertragung mindestens einer Faxseite muß dieser Dienst allerdings teuer vergebührt werden und ist daher wenig attraktiv. Ein Versenden von Faxen auf SMS ist bisher nicht möglich und wird wegen des Mangels an einem Automatismus zur Reduktion des Informationsgehalts eines Faxes auf eine kleine Datenmenge (z.B. 160 Zeichen bei GSM SMS) in naher Zukunft nicht realisierbar sein.

Ansonsten ist das Erreichen von Teilnehmeranschlüssen mit analogen Endgeräten, die immer noch die überwiegende Mehrheit aller Anschlüsse ausmachen, aus der SMS-Welt bisher nicht möglich.

Aus der WO 98/35513 A, die als nächstliegender Stand der Technik angesehen wird, sind Verfahren und Einrichtungen zur Übertragung von Kurznachrichten von einem Mobilfunknetz über ein netzübergreifendes Gateway zu einem analogen Endgerät im Festnetz offenbart. Im Gateway erfolgt eine Konvertierung des SMS-Formats in ein für das analoge Endgerät lesbares Format. Hier wird der bekannte Weg SMS zu Fax sowie SMS zu ISDN bzw. ISDN zu SMS beschrieben, wie er auch in der Beschreibungseinleitung der vorliegenden Anmeldung erwähnt ist. Das beschriebene Verfahren stellt jedoch keine sinnvolle kommerzielle Lösung zur Übertragung von SMS von und an analoge Anschlüsse darstellen, da eine Faxübertragung nur unidirektional stattfindet und zur Übertragung einer SMS von 160 Zeichen eine komplette Faxseite gesendet werden muss. Nachteil von ISDN ist, dass keine Lösung für analoge Anschlüsse möglich ist.

Aufgabe der Erfindung ist es daher, ein Verfahren und eine Vorrichtung zur Übertragung von Kurznachrichten in Telekommunikationsnetzen vorzuschlagen, mit welchen eine schnelle und kostengünstige Übertragung beliebiger Kurznachrichten an Teilnehmeranschlüsse mit analogen Endgeräten möglich ist.

Diese Aufgabe wird durch die kennzeichnenden Merkmale der unabhängigen Patentansprüche gelöst.

Zur Realisierung des Verfahrens werden zwei Komponenten benötigt: ein Gateway zur Konvertierung des Inhalts von SMS in ein für eine Übertragung bis an das analoge Endgerät geeignetes Format und ein Terminal (TIX: Textual_ Information EXchange) zur Codierung bzw. Decodierung des SMS-Inhalts auf der Nutzerseite.

Vorteilhaft ermöglicht das beschriebene Verfahren das Übertragen des individuell gestaltbaren Inhalts von SMS an Teilnehmeranschlüsse mit analogen Endgeräten, indem der Inhalt der SMS in Signale derart konvertiert wird, daß eine Übertragung bis an das analoge Endgerät möglich ist (z.B. durch Signalisierungstöne innerhalb der Telefoniebandbreite oder durch Übertragen der Information im Anrufsignal nach dem europäischen Telekommunikationsstandard ETS 300659-1 bzw. während einer bestehenden Verbindung nach ETS 300659-2). Eine Übertragung in umgekehrter Richtung wird ebenfalls ermöglicht.

Wegen der geringen Datenmenge bei SMS (im GSM System 160 Zeichen) wird zur Übertragung des Inhalts eine erheblich kürzere Zeit benötigt, als es z.B. bei einem Fax der Fall ist. Dies ermöglicht selbst bei Zieladressen im Ausland eine kostengünstige und daher für den Nutzer interessante Übertragung.

Außerdem besteht durch das Verfahren die Möglichkeit, von analogen Anschlüssen aus SMS zu versenden. Wegen der dann möglichen Konvertierung zu Emails ist letztendlich ein kostengünstiges Senden und Empfangen kurzer Emails von einem analogen Anschluß aus möglich.

Vorteilhafte Ausführungsformen und Weiterbildungen der Erfindung sind Gegenstand der abhängigen Patentansprüche.

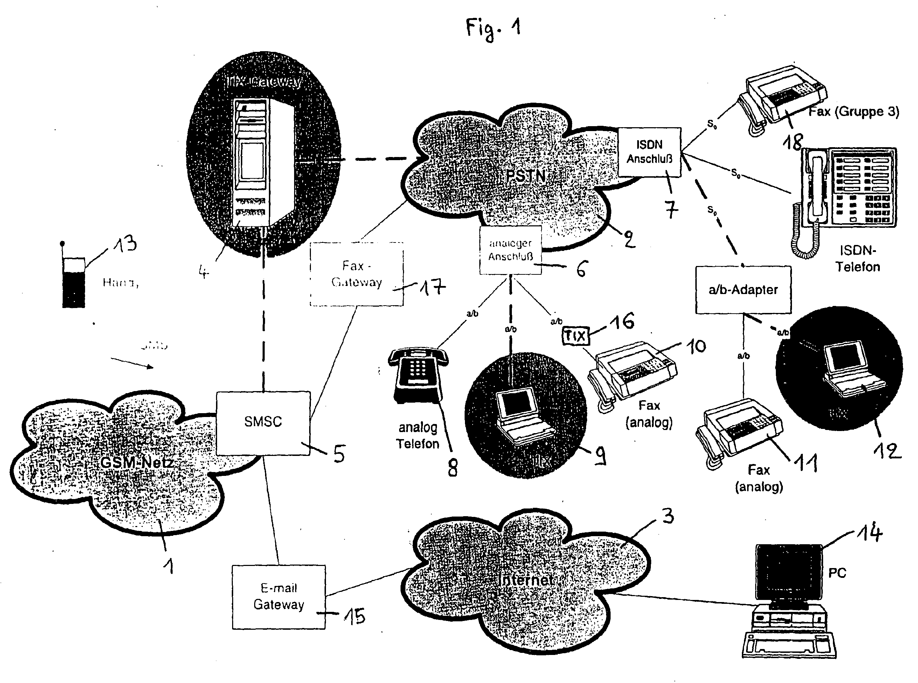

Die Erfindung wird nachfolgend anhand der beiliegenden Zeichnungsfigur näher beschrieben. Dabei gehen aus der Zeichnung und ihrer Beschreibung weitere Merkmale und Vorteile der Erfindung hervor.

Die einzige Zeichnung zeigt allgemein verschiedene Telekommunikationsnetze wie GSM-Mobilfunknetz 1, öffentliches Festnetz 2 (PSTN) und Internet 3, die über entsprechende Netzübergänge miteinander verbunden sind. Insbesondere das öffentliche Festnetz 2 besitzt Teilnehmeranschlüsse 6, 7 mit analogen Endgeräten 8-12, wie z.B. Telefon oder Telefax, die nun erfindungsgemäss SMS-Nachrichten z.B. vom GSM-Mobilfunknetz 1 empfangen und auch an dieses senden können.

Zentrales Element für die Durchführung des beschriebenen Verfahrens ist das (TIX)-Gateway 4.
Hauptaufgabe des Gateways 4 ist die Konvertierung des SMS Inhalts in ein für eine Übertragung bis an ein analoges Endgerät geeignetes Format (z.B. DTMF-Töne, bzw. Modem-Töne). Das Gateway 4 ist auf einer Seite an die Kurznachrichtenzentrale 5 (SMSC: Short Message Service Center) des Mobilfunknetzes 1 angebunden. Auf der anderen Seite ist eine Anbindung an ein öffentliches Telekommunikationsnetz 2 mit Teilnehmeranschlüssen 6, 7 mit analogen Endgeräten 8-12 realisiert.

Seitens der analogen Endgeräte 8-12 wird zum Senden und Empfangen von SMS ein Terminal (TIX) benötigt, welches die übertragenen SMS Informationen für die analogen Endgeräte leserlich macht. Hierbei handelt es sich um ein Low-Cost Endgerät bestehend aus einer Tastatur, einem Display und der notwendigen Steuerlogik, das über eine a/b Schnittstelle an ein Telekommunikationsnetz angeschlossen werden kann. Das TIX kann entweder als eigenständiges Endgerät 9, 12 oder als Teil eines bestehenden Endgeräts 11 (Telefon, Fax oder PC) oder als Vorschaltgerät 16 für ein Endgerät 10 implementiert sein.

Die Übertragung einer Kurznachricht (SMS) an ein analoges Endgerät geschieht wie folgt:
Von einem Mobilfunkendgerät 13 bzw. von einem Personal Computer 14 via Internet und Email Gateway 15 wird eine Kurznachricht (SMS) für ein analoges Endgerät 8-12 abgesetzt, die in der Kurznachrichtenzentrale 5 (SMSC) eintrifft. Das Gateway 4 erhält die Kurnachricht vom SMSC 5 und stellt eine Verbindung zu der angegebenen Zieladresse (Rufnummer) des analogen Endgerätes 8-12 her. Der in digitaler Form vorliegende SMS-Inhalt wird nun in Signale derart konvertiert, daß eine Übertragung bis an das angerufene analoge Endgerät 8-12 möglich ist. Gemäß einer nicht beanspruchten Ausgestaltung der Erfindung können das analoge Tonsignale mit bestimmten Frequenzen innerhalb der Telefoniebandbreite sein. Nach erfolgreicher Übertragung des SMS-Inhalts und ggf. einiger zusätzlicher Information (Absender, Sendezeit, etc.) wird der Ruf vom Gateway 4 abgebaut. Bedarfsweise kann vom analogen Endgerät 8-12 über das Gateway 4 eine Empfangsbestätigung an die SMSC 5 zurückgesendet werden.

Als erfindungsgemäße Alternative zu einer Übertragung von Tonsignalen innerhalb der Telefoniebandbreite kann auch eine Modulation des Rufzeichens vorgenommen werden, wie die bei der Rufnummernanzeige (Caller ID) bei analogen Anschlüssen bereits heute üblich ist (nach ETS 300 659-1). Zwar ist dann voraussichtlich eine Interaktion zwischen Gateway 4 und der den Rufton generierenden Vermittlungsstelle des Festnetzes 2 notwendig, Vorteil dabei ist jedoch, daß die Übertragung der SMS schon während der Ruftonphase (Signalisierungsverbindung) und ohne tatsächliches Zustandekommen eines Rufaufbaus möglich ist. Auch eine Übermittlung der SMS nach ETS 300659-2 ist denkbar. In diesem Fall wäre ebenfalls eine Interaktion mit der Vermittlungsstelle notwendig. Vorteil wäre jedoch, daß eine SMS auch während eines bestehenden Calls den Nutzer erreichen würde (Erreichbarkeit per SMS bei besetzt).
Im Gegensatz zu der bisherigen Verwendung des Standards ETS 300659-1 bzw. ETS 300659-2, kann in diesem Fall die übermittelte Nachricht von der anrufenden Seite individuell gestaltet werden.

Wird der SMS Inhalt nicht nach ETS 300659-1 bzw. ETS 300659-2 übertragen, kann bei besetztem Teilnehmeranschluß der Versand der SMS zu einem späteren Zeitpunkt wiederholt werden. Die Steuerung dazu kann entweder durch das SMSC 5 oder durch das Gateway 4 selbst erfolgen.

Ist die Übertragung der SMS mißlungen, da sich am analogen Teilnehmeranschluß 8-12 kein entsprechendes Terminal (TIX) gemeldet hat, so wird eine Nichtempfangsbestätigung bzw. eine Fehlermeldung an das SMSC 5 zurückgesandt. Dies gilt nicht bei Übertragung nach ETS 300659-1 und ETS 300659-2, da es hierfür keine Empfangsbestätigung von der Empfängerseite gibt.

Der Übertragungsweg vom analogen Endgerät 8-12 zur Kurznachrichtenzentrale ist 5 wie folgt:
Dazu wird, wie weiter unten beschrieben, ein Ruf z.B. von dem TIX 9 oder 12 an das Gateway 4 aufgebaut. Das Gateway 4 nimmt den Ruf an und empfängt den Inhalt der SMS und etwaige zusätzliche Informationen in Form verschiedener Töne. Nach ihrer Konvertierung in das digitale SMS-Format wird diese Information an das SMSC 5 übertragen, von wo aus sie zum vorbestimmten Empfänger weitergeleitet werden kann, entweder als SMS an einen Mobilfunkteilnehmer 13, über das Email Gateway 15 an eine Email Adresse, über ein Fax-Gateway 17 an ein Faxgerät 18, etc.). Die Vergebührung des Dienstes kann über den Ruf von dem TIX 9 an das Gateway 4 erfolgen.

Schließlich ist auch eine Übertragung von SMS zwischen einem analogem Endgerät und einem anderen analogem Endgerät möglich. Diese Übertragung direkt zwischen den analogen Endgeräten erfolgt vorzugsweise unter Umgehung des Gateways 4. Hierzu wird eine Telekommunikationsverbindung zwischen den entsprechenden analogen Anschlüssen 9 und 12 aufgebaut und die Nachricht, gemäß einer nicht beanspruchten Ausgestaltung der Erfindung, über Frequenzen innerhalb der Telefoniebandbreite übermittelt. In diesem Fall ist in den Endgeräten 9, 12 eine Funktionalität zur Behandlung der Sonderfälle (kein passendes Endgerät am Anschluß vorhanden, Anschluß besetzt, Ruf wird nicht angenommen, etc.) vorzusehen.

Allgemein ist zum Empfang von SMS zu erwähnen, daß wenn eine SMS an den mit einem TIX ausgestatteten Teilnehmeranschluß 8-12 gesendet wird, von dem oben beschriebenen Gateway 4 ein Ruf zu diesem Teilnehmeranschluß 8-12 aufgebaut wird. Der Ruf wird von dem TIX angenommen und nach einem kurzen Handshake kann das Gateway 4 den Inhalt der SMS (160 Zeichen) und evtl. einige zusätzliche Informationen (Absender, Sendezeit, etc.) an den TIX senden. Nach erfolgter Übertragung kann der Ruf abgebaut und die empfangene Information auf dem Display des analogen Endgerätes angezeigt werden. Erfindungsgemäß kann die Übertragung wie oben erwähnt nach dem in ETS 300659-1 standardisierten Verfahren (Modulation des Rufzeichens) erfolgen.

Beim Senden einer SMS vom TIX 9, 12 wird über die Tastatur oder über eine andere geeignete Schnittstelle der Text einer SMS eingegeben und mit einer Zieladresse versehen. Üblicherweise wird es sich dabei um eine Mobilfunkrufnummer eines Teilnehmers 13 handeln. Als Zieladresse können aber auch Email Adressen, andere Festnetztelefon- bzw. Faxnummern oder ähnliches angegeben werden. Der TIX 9, 12 stellt eine Verbindung zum Gateway 4 oder direkt zu einem anderen TIX her und überträgt den Inhalt der SMS zusammen mit der Zieladresse dorthin. Im Gateway 4 wird der Inhalt der SMS konvertiert und wie oben beschrieben an die Zieladresse weitergeleitet.

## Patentansprüche

1. Verfahren zur Übertragung von Kurznachrichten in Telekommunikationsnetzen, wobei eine Übertragung der Kurznachricht vom einem Mobilfunkendgerät (13) zu einem analogen Endgerät (8-12) erfolgt durch:
Empfangen einer von einer Kurznachrichtenzentrale (5), SMSC, übermittelten Kurznachricht in einem netzübergreifenden Gateway (4);
Aufbauen einer Verbindung zum analogen Endgerät und Übertragen der Kurznachricht über eine Signalisierungsverbindung im Anrufsignal nach dem europäischen Telekommunikationsstandard ETS 300659-1 oder während einer bestehenden Verbindung nach ETS 300659-2; und
Codieren bzw. Decodieren des SMS-Inhalts mittels einem mit dem Endgerät verbundenen Terminal (16), TIX;
und wobei eine Übertragung der Kurznachricht vom analogen Endgerät (8-12) zum Empfänger erfolgt durch:
Codieren bzw. Decodieren des SMS-Inhalts mittels einem mit dem Endgerät verbundenen Terminal (16), TIX;
Aufbauen einer Verbindung zwischen dem Terminal (16) und dem Gateway (4),
Übertragen der Kurznachricht über eine Signalisierungsverbindung im Anrufsignal nach dem europäischen Telekommunikationsstandard ETS 300659-1 oder während einer bestehenden Verbindung nach ETS 300659-2; Konvertierung der Nachricht im Gateway (4) in das digitale SMS-Format; und
Übertragen der Information an die Kurznachrichtenzentrale (5), SMSC, und Weiterleiten zum vorbestimmten Empfänger.

2. Verfahren nach Anspruch 1, **dadurch gekennzeichnet, daß** neben der Kurznachricht zusätzliche Informationen übertragen werden.

3. Verfahren nach einem der Ansprüche 1 oder 2, **dadurch gekennzeichnet, daß** das Gateway (4) sowohl mit der Kurznachrichtenzentrale (5) eines Mobilfunknetzes (1) als auch mit Vermittlungsstellen mindestens eines weiteren Telekommunikationsnetzes (2) verbunden ist.

4. Vorrichtung zur Durchführung des Verfahrens gemäß den Ansprüchen 1-3, mit einem Telekommunikationsnetz-übergreifenden Gateway (4) zur Konvertierung des Inhalts von empfangenen SMS in ein für eine Übertragung bis zu einem Endgerät (8-12) an einem Teilnehmeranschluss eines Empfängers geeignetes Format,
**gekennzeichnet durch**:
- Mittel zum Aufbauen einer Verbindung zwischen dem Gateway (4) und einem Terminal (16), TIX,
- Mittel zur Übertragung der Kurznachricht über eine Signalisierungsverbindung im Anrufsignal nach dem europäischen Telekommunikationsstandard ETS 300659-1 oder während einer bestehenden Verbindung nach ETS 300659-2; und
- ein mit dem analogen Endgerät (8-12) des Teilnehmeranschlusses verbundenes Terminal (16), TIX, zur Codierung bzw. Decodierung des empfangenen SMS-Inhalts.

5. Vorrichtung nach Anspruch 4, **dadurch gekennzeichnet, daß** das Terminal (16), TIX, sowohl als eigenständiges Endgerät (9, 12) als auch als Teil eines bestehenden Endgeräts (11) oder als Vorschaltgerät (16) für ein Endgerät (10) ausgebildet ist.

## Claims

1. Method for transmitting short messages in telecommunications networks, wherein transmission of the short message from a mobile communications terminal device (13) to an analogue terminal device (8-12) ensues by:
receiving a short message conveyed by a short message switching centre (5), SMSC, in a network junction gateway (4);
setting up a connection to the analogue terminal device and transmitting the short message via a signalling connection in the ringing signal according to the European telecommunications standard ETS 300659-1 or during an existing connection according to ETS 300659-2; and
coding or decoding the SMS content by means of a terminal (16), TIX, connected to the terminal device;
and wherein transmission of the short message from the analogue terminal device (8-12) to the recipient ensues by:
coding or decoding the SMS content by means of a terminal (16), TIX, connected to the terminal device; setting up a connection between the terminal (16) and the gateway (4),
transmitting the short message via a signalling connection in the ringing signal according to the European telecommunications standard ETS 300659-1 or during an existing connection according to ETS 300659-2; converting the message in the gateway (4) into the digital SMS format; and
transmitting the information to the short message switching centre (5), SMSC, and conveying it on to the predetermined recipient.

2. Method according to claim 1, **characterised in that** apart from the short message additional items of information are transmitted.

3. Method according to one of claims 1 or 2, **characterised in that** the gateway (4) is connected both to the short message switching centre (5) of a mobile communications network (1) and to switching centres of at least one other telecommunications network (2).

4. Device for carrying out the method according to claims 1-3 having a telecommunications network junction gateway (4) for converting the content of received SMS into a format suitable for transmission up to a terminal device (8-12) on a subscriber line of a recipient,
**characterised by**:
- means for setting up a connection between the gateway (4) and a terminal (16), TIX,
- means for transmitting the short message via a signalling connection in the ringing signal according to the European telecommunications standard ETS 300659-1 or during an existing connection according to ETS 300659-2; and
- a terminal (16), TIX, connected to the analogue terminal device (8-12) of the subscriber line for coding or decoding the received SMS contents.

5. Device according to claim 4, **characterised in that** the terminal (16), TIX, is constructed both as an independent terminal device (9, 12) and as part of an existing terminal device (11) or as a front-end device (16) for a terminal device (10).

## Revendications

1. Procédé de transmission de messages courts dans des réseaux de télécommunication, selon lequel une transmission du message court d'un téléphone mobile (13) vers un poste terminal analogique (8-12) se fait grâce
- à la réception, dans une passerelle (4) recouvrant partiellement le réseau d'un message court, d'un message court transmis par un central de messages courts (5), SMSC,
- à l'établissement d'une liaison avec le poste terminal analogique et à la transmission du message court par l'intermédiaire d'une liaison de signalisation dans le signal d'appel selon la norme de télécommunication européenne ETS 300659-1 ou pendant une liaison existante selon la norme ETS 300659-2, et
- au codage et décodage du contenu du SMS à l'aide d'un terminal (16), TIX, relié au poste terminal
et une transmission du message court du poste terminal analogique (8-12) vers le destinataire se fait grâce
- au codage et décodage du contenu du SMS à l'aide d'un terminal (16), TIX, relié au poste terminal,
- à l'établissement d'une liaison entre le terminal (16) et la passerelle (4),
- à la transmission du message court par l'intermédiaire d'une liaison de signalisation dans le signal d'appel selon la norme de télécommunication européenne ETS 300659-1 ou pendant une liaison existante selon la norme ETS 300659-2,
- à la conversion du message, dans la passerelle (4), en format SMS numérique, et
- à la transmission de l'information au central de messages courts (5), SMSC, et à la retransmission au destinataire prédéfini.

2. Procédé selon la revendication 1, **caractérisé en ce que** des informations supplémentaires sont transmises en plus du message court.

3. Procédé selon la revendication 1 ou 2, **caractérisé en ce que** la passerelle (4) est reliée à la fois au central de messages courts (5) d'un réseau mobile (1) et à des centres de commutation d'au moins un autre réseau de télécommunication (2).

4. Dispositif pour la mise en oeuvre du procédé selon les revendications 1 à 3, comportant une passerelle (4) recouvrant partiellement le réseau de télécommunication et destinée à convertir le contenu de SMS reçus en un format qui convienne pour une transmission jusqu'à un poste terminal (8-12) au niveau d'un raccordement d'abonné d'un destinataire,
**caractérisé par**
- des moyens pour établir une liaison entre la passerelle (4) et un terminal (16), TIX,
- des moyens pour transmettre le message court par l'intermédiaire d'une liaison de signalisation dans le signal d'appel selon la norme de télécommunication européenne ETS 300659-1 ou pendant une liaison existante selon la norme ETS 300659-2 ; et
- un terminal (16), TIX, relié au poste terminal analogique (8-12) du raccordement d'abonné, pour le codage et le décodage du contenu SMS reçu.

5. Dispositif selon la revendication 4, **caractérisé en ce que** le terminal (16), TIX, est conçu à la fois comme un poste terminal autonome (9, 12) et comme un élément d'un poste terminal existant (11) ou comme un appareil additionnel (16) pour un poste terminal (10).
